# EUROPEAN PATENT SPECIFICATION

(11) **EP 1 331 217 B1**
(45) Date of publication and mention of the grant of the patent: **30.08.2006**
(21) Application number: 02010264.6
(22) Date of filing: 17.05.2002
(51) Int. Cl.: C07C 43/20, C08G 65/26, C10L 1/18, C10L 1/14, C10L 10/04

(54) **Alkyl-substituted cresol polyalkoxylates and their use in fuels**
Alkylsubstituierte cresolpolyalkoxylate und ihre Verwendung in Brennstoffen
cresols polyalkoxylés et alkylés, et leur utilisation dans des combustibles

(30) Priority: 17.01.2002 US 46823
(43) Date of publication of application: 30.07.2003
(73) Proprietor: Afton Chemical Intangibles LLC, Richmond, Virginia 23219 (US)
(72) Inventor: Colucci, William J., Glen Allen, VA 23060 (US); Jao, Tze Chi, Glen Allen, VA 23060 (US); Li, Shoutian, Midlothian, VA 23113 (US)
(74) Representative: Schwabe - Sandmair - Marx

(56) References cited:
- EP-A- 0 827 999
- EP-A- 0 878 532
- WO-A-00/50543
- WO-A-02/059237
- US-A- 2 205 947
- US-A- 5 298 039
- US-B1- 6 248 142

## Description

### Technical Field

The present invention relates to special alkyl-substituted aryl polyalkoxylates, and specifically to alkyl substituted cresyl polyalkoxylates, their use as carrier oils, as detergents in fuel compositions, and fuel additive concentrates, and fuel compositions that contain these alkyl-substituted aryl polyalkoxylates.

### Background Information

Carburetors and intake systems of gasoline engines as well as injection systems for fuel metering are increasingly being contaminated by dust particles from the air, uncombusted hydrocarbon residues from the combustion chamber, and the crank case vent gases passed into the carburetor.

To avoid these disadvantages, additives (detergents) are added to the fuel to keep valves and carburetor or injection systems clean. Such detergents are generally used in combination with one or more carrier oils. The carrier oils perform an additional wash function, often support and promote the detergents in their cleaning and keeping clean effect and can thus help to reduce the amount of detergents required. The carrier oils usually used are viscous, high-boiling and in particular heat-stable liquids. They coat the hot metal surfaces, for example the intake valves, with a thin liquid film and thus prevent or delay the formation and deposition of decomposition products on the metal surfaces.

Frequently used carrier oils are, for example, high-boiling refined mineral oil fractions, but also synthetic liquids, such as oil-soluble adducts of alkylene oxides with alcohols. EP-A 277345 describes adducts of ethylene oxide, propylene oxide and/or butylene oxide with polybutyl or polyisobutene alcohols as carrier oils in fuel or lubricant compositions, it being possible for from 1 to 200 such alkylene oxide units to undergo addition per mole of alcohol, but the molecular weight of the polyisobutene should not be exceeded.

WO 00/50543 teaches a polyalkene alcohol polyalkoxylate for use in fuel compositions. No mention is made in WO 00/50543 of an alkyl-substituted aryl poly alkoxylate composition for fuels. US-A-3 615 295 and US-A-5 298 039 disclose additives for gasoline engines containing polyalkoxylated nonylphenol and (di-) alkylphenol propoxylates.

However, the carrier oils known from the prior art frequently have only limited compatibility with other additives, so that separation may occur. Furthermore, the generally high viscosity of these carrier oils often gives rise to formulation problems. In particular, they are not yet capable of completely eliminating the undesired effect of "sticking of the valves". "Sticking of the valves" is understood as meaning complete loss of compression on one or more cylinders of the internal combustion engine if, owing to polymer deposits on the valve shaft, the spring force is no longer sufficient to close the valves properly.

### Summary of the Invention

It is an object of the present invention to provide carrier oils for detergents in fuel compositions, which carrier oils no longer have the prior art problems described. In particular, these carrier oils should, as far as possible, be additionally effective as detergents.

The present invention achieves this object by adding to a fuel an alkyl-substituted aryl polyalkoxylates of the formula I

R-(Ar)ₙ-(O-A)ₘ-OH (I)

where
R is a polyalkene radical derived from C₂- to C₂₀-alkenes and having a number average molecular weight of from 200 to 5,000,
Ar is a cresol,
A is an alkylene group of 2 to 8 carbon atoms,
m is a number from 12 to 32; and
n is 1.

By "aryl" herein is meant cresol.

Suitable radicals R are straight-chain or branched hydrocarbon groups, saturated or partially unsaturated, which are derived from C₂- to C₂₀-alkenes, in particular from C₃- to C₁₂-alkenes, especially from C₃- to C₆-alkenes. Examples of typical alkenes are ethene, propene, butenes, pentenes, hexenes, heptenes, octenes, nonenes, decenes, undecenes, and dodecenes. Of particular interest are propene, *n*-butene, and isobutene. The polyalkene on which the hydrocarbon radical R is based is obtainable by oligomerization or polymerization of these alkenes, the oligomerization or polymerization being carried out as a rule (for example by cationic or coordinate oligomerization or polymerization) to produce at least one double bond which can be further reacted with the Ar group to give the corresponding aryl polyalkoxylate.

R is preferably a polybutyl or polyisobutyl radical derived from butylene or isobutene and up to 20% by weight of *n*-butene and preferably having a number average molecular weight (MN) of from 200 to 2500. R more preferably is a polybutyl or polyisobutyl radical having a number average molecular weight of from 350 to 1500, in particular from 400 to 1250, especially from 450 to 1000. Preferably, in an embodiment of the present invention, R is also composed solely of isobutene units.

R may preferably be based on highly reactive polyisobutene (having double bonds predominantly in the alpha position) which, as described in EP-A 277345. The aromatic linking group Ar a cresol group. It is particularly surprising that the aromatic linking group can impart improved intake valve deposit performance to detergent fuel formulations containing a component having this group. It is also surprising to achieve improved valve stick performance in an engine combusting a fuel composition containing this aromatic linking group in the additive of the present invention.

The alkylene group A is preferably derived from corresponding alkylene oxides, such as ethylene oxide, propylene oxide, 1,2-butylene oxide, and *cis-* or *trans*-2,3-butylene oxide. However, it may also be 1,3-propylene, 1,4-butylene, 1,6-hexylene or 1,8-octylene. A may also comprise a mixture of different groups from among the stated groups. A can particularly preferably comprise a 1,2-propylene group, a 1,2-butylene group, or a mixture thereof, or an ethylene oxide group (EO), a propylene oxide group (PO), or a mixture thereof (EO/PO). Another preferred A is a mixture of ethylene oxide groups, propylene oxide groups, and butylene oxide groups (BO), or (EO/PO/BO). The most preferred A group is 1,2-propylene group.

The number m may be a single integer or a combination of several or many integers, representing wider molecular weight distributions. The number m is a number from 12 to 32. A preferred range of values for m in an embodiment of the present invention is between 16-28, and most preferred is about 24. The number m can represent the sum of subscripts x, y, and/or z, where x is the subscript in (EO)ₓ, y is the subscript in (PO)_{y}, and z is the subscript in (BO)_{z}, where (EO), (PO), and (BO) make up the mixture of groups in A.

### Detailed Description of the Invention

The novel alkyl-substituted aryl polyalkoxylates (I) can be prepared by conventional methods, for example, by reacting the parent hydroxy aromatic compound with the corresponding amount of alkylene oxide in the presence of suitable catalysts, such as potassium hydroxide, preferably in an amount of from 0.01 to 1% by weight, particularly from 0.05 to 0.5% by weight of potassium hydroxide, based on the amount of the reaction product expected. Typical reaction temperatures are from 70 to 200°C, in particular from 100 to 160°C. The pressure is usually from 3 to 30 bar. The reaction product is worked up in the usual manner by expelling volatile components under reduced pressure and, if required, by filtration.

The novel alkyl-substituted aryl polyalkoxylates (I) are very suitable as carrier oils for detergents in fuel compositions. They are particularly useful in gasoline fuel compositions, as well as diesel fuel, heating oil, residual oils, and jet fuels.

Examples of conventional detergents useful in the present invention are:
(a) polyisobuteneamines which are obtainable, according to EP-A 244616, by hydroformylation of highly reactive polyisobutene and subsequent reductive amination with ammonia, monoamines or polyamines, such as dimethyleneaminopropylamine, ethylenediamine, diethylenetriamine, triethylenetetramine or tetraethylenepentamine,
(b) poly(iso)buteneamines which are obtainable by chlorination of polybutenes or polyisobutenes having double bonds predominantly in the beta and gamma position, and subsequent amination with ammonia, monoamines, or the abovementioned polyamines,
(c) poly(iso)buteneamines which are obtainable by oxidation of double bonds in poly(iso)butenes with air or ozone to give carbonyl or carboxyl compounds and subsequent amination under reducing (hydrogenating) conditions,
(d) polyisobuteneamines which are obtainable, according to DE-A 19620262, from polyisobutene epoxides by reaction with amines and subsequent dehydration and reduction of the aminoalcohols,
(e) if required, hydroxyl-containing polyisobuteneamines which are obtainable, according to WO-A 97/03946, by reaction of polyisobutenes having an average degree of polymerization of from 5 to 100 with nitrogen oxides or mixtures of nitrogen oxides and oxygen and subsequent hydrogenation of these reaction products,
(f) hydroxyl-containing polyisobuteneamines which are obtainable, according to EP-A 476 485, by reaction of polyisobutene epoxides with ammonia, monoamines or the abovementioned polyamines,
(g) polyetheramines which are obtainable by reaction of C₂- to C₃₀-alkanols, C₆- to C₃₀-alkanediols, mono- or di-C₂- to C₃₀-alkylamines, C₁- to C₃₀-alkylcyclohexanols or C₁- to C₃₀-alkylphenols with from 1 to 30 mol of ethylene oxide and/or propylene oxide and/or butylene oxide per hydroxyl or amino group and subsequent reductive amination with ammonia, monoamines, or the abovementioned polyamines, it also being possible to use polyetheramines having a carbamate structure,
(h) polyalkenyl Mannich bases which are obtainable, according to EP-A 831 141, by reaction of, for example, polyisobutene-substituted phenols, or polypropylene-substituted phenols, or polyalphaolefin-substituted phenols with aldehydes and monoamines or the abovementioned polyamines, and
(i) conventional dispersants, for example, imides, amides, and esters of polyisobutene succinic anhydrides.

Further, fuel additives which may be used, together with the compounds I, are those which inhibit the wear of valve seats. Of interest here are, for example, additives containing carboxyl groups or their alkali metal or alkaline earth metal salts or esters, for example copolymers of C₂-C₄₀-olefins with maleic anhydride, having a total molar mass of from about 500 to about 20,000, some or all of whose carboxyl groups have been converted into the alkali metal or alkaline earth metal salts or esters and the remainder of the carboxyl groups having reacted with alcohols or amines, as described in EP-A 307815, or additives containing sulfo groups or their alkali metal or alkaline earth metal salts, for example alkali metal or alkaline earth metal salts of alkyl sulfosuccinates, as described in EP-A 639632. The gasoline fuel additives which inhibit the wear of valve seats can advantageously also be used in combination with conventional fuel detergents, such as poly(iso)buteneamines or polyetheramines, as described in WO-A 87/01126.

The present invention also relates to fuel additive concentrates which contain the novel alkyl-substituted aryl polyalkoxylates (I) in amounts of from 0.1 to 80%, in particular from 0.5 to 60% by weight, based on the total amount of the concentrates. These concentrates can also contain the above-mentioned detergents and further components usual for this purpose, as well as dispersants, and solvents or diluents, for example aliphatic and aromatic hydrocarbons, such as Solvent Naphtha.

Further conventional components and assistants are corrosion inhibitors, for example based on film-forming ammonium salts of organic carboxylic acids or esters or on heterocyclic aromatics in the case of inhibition of corrosion of nonferrous metals, antioxidants, or stabilizers, for example based on amines such as *p*-phenylenediamine, dicyclohexylamine or derivatives thereof, or on phenols, such as 2,4-di-*tert*-butylphenol or 3,5-di-*tert*-butyl-4-hydroxyphenylpropionic acid, demulsifiers, antistatic agents, metallocenes, such as ferrocene or methylcyclopentadienyl manganese tricarbonyl, lubricity additives, such as specific fatty acids and esters, alkenylsuccinic esters, bis(hydroxyalkyl) fatty amines, hydroxyacetamides or castor oil, and markers. Sometimes amines, too, can be added to lower the pH of the fuel.

Further conventional carrier oils should also be mentioned as further customary components and additives, for example mineral carrier oils (base oils), in particular those of the viscosity class Solvent Neutral (SN) 500 to 2000, and synthetic carrier oils based on olefin polymers having M_{N} = from about 400 to about 1800, especially those based on polybutene or polyisobutene (hydrogenated or nonhydrogenated) or on polyalphaolefins or poly(internal olefins).

The present invention furthermore relates to fuel compositions, in particular gasoline fuel compositions, which contain the novel alkyl-substituted aryl polyalkoxylates (I) in effective amounts. As a rule, effective amounts are to be understood as meaning from 10 to 5000, in particular from 50 to 2000, ppm by weight based on the total amount of the composition. In addition to the novel compounds I as carrier oils, the fuel compositions of the present invention can contain additional detergents and dispersants as well as the stated further components and adjuvants customary for this purpose and solvents or diluents.

Furthermore, combinations of a gasoline fuel with a mixture of alkyl-substituted aryl polyalkoxylates (I), and a detergent, such as polyisobuteneamine detergents, in particular those of the above-mentioned groups (a) through (i), and corrosion inhibitors and/or lubricity additives based on carboxylic acids or esters or fatty acids, which may be present as monomeric and/or dimeric species, are particularly suitable for the novel fuel compositions.

The novel alkyl-substituted aryl polyalkoxylates (I) of an embodiment of the present invention are capable of reducing or effectively avoiding the undesired "sticking of the valves", in particular in gasoline engines. As a rule, they are also adequately compatible with the other additives so that no separation effects occur. Moreover, their viscosity behavior does not give rise to any formulation problems.

The compounds I of the present invention can be used in an embodiment as carrier oils and in another embodiment as effective detergents. Even when metered in small amounts, the compounds of the present invention therefore make a large contribution to the overall performance of an additive package with respect to the detergent effect. This provides an ability to reduce at least a part of the conventional more expensive detergents than would otherwise be used.

### Examples

### Sample A - Preparation of adduct of propylene oxide or 1,2-butylene oxide with cresol

A 950 MW *p*-PIB cresol was reacted with 24 moles of liquefied propylene oxide in the presence of a catalyst, such as potassium hydroxide, to give the corresponding PIB cresol propoxylate having a Mn of about 2500. The starting PIB cresol was 77% active, with the remainder being unreacted PIB of about 1050 Mn.

### Sample B - Preparation of adduct of propylene oxide with cresol

A 208 MW *p*-PIB cresol was reacted with 24 moles of liquefied propylene oxide in the presence of a catalyst, such as potassium hydroxide, to give corresponding PIB cresol propoxylate having a Mn of about 1444. The starting PIB cresol was 74.6% active, with the remainder being 16% unreacted PIB of 325 MW, and 6.5% of mixed *t*-amyl/*t*-butyl cresols.

### Testing of performance characteristics

Tests on the cleanliness of intake valves were carried out in a 2.3-liter Ford, 4 cylinder, 2-valve engine according to the IVD test method ASTM D-6210. Fuels were prepared using 43.7 pounds per thousand barrels (PTB) (≅ 1.24 mg/l) active solids in which the detergent was HiTEC® 6410 (a PIB-substituted Mannich detergent available from Ethyl Corporation) at a treat rate of 23.4 PTB (≅ 66.7 mg/l) of gasoline. The samples also contained a 750 MW PIB carrier fluid at a treat rate of 10.3 PTB (≅ 29.4 mg/l). The prior art carrier fluid used in Comparative Sample 1 (and a duplicate Comparative Sample 2) was a nonyl phenol propoxylate reacted with 24 moles of propylene oxide. The carrier fluids in the inventive samples were A and B, prepared as described herein. All carrier fluid polyols were used at a dose rate of 10 PTB (≅ 28.5 mg/l).

The results of the IVD test are shown below:

| | Average IVD (mg) |
|---|---|
| Comparative Sample 1 | 92.6 |
| Comparative Sample 2 | 104.0 |
| Inventive Sample A | 54.0 |
| Inventive Sample B | 63.1 |

As evident from the above Table, the inventive additive packages A and B provided a significant reduction in deposit formation on the intake valves in the test engine, relative to the deposits resulting from the combustion of fuel not containing the alkyl-substituted aryl polyalkoxylates of the present invention. In general, the industry recognizes a pass limit of about 100 mg or less average deposit formation per intake valve. Specifically, the 63.1 mg and 54.0 mg average IVD deposits are surprisingly improved over the 92.6 mg and the 104.0 mg of the prior art fuel samples.

In addition, the inventive samples A and B were compared to the conventional carrier fluids of Comparative Sample 1 in a seven-day Vanagon valve sticking test at 0 degree F(-17.7°C). The test is designed to mirror the well-known European Wasserboxer test (CEC F-16-T-96). A "Pass" is obtained by no loss of compression in the engine fueled by the fuel sample being tested, whereas a "Fail" is indicated when there is zero compression, caused by a stuck (open) valve. The test results are shown below:

| | |
|---|---|
| Comparative Sample 1 | Fail |
| Inventive Sample A | Pass |
| Inventive Sample B | Pass |

The results illustrate the improved valve sticking performance achieved by the use of the fuel compositions of the present invention combusted in a gasoline engine, relative to the valve sticking performance of a fuel composition without the inventive fuel additive.

This invention is susceptible to considerable variation in its practice. Accordingly, this invention is not limited to the specific exemplifications set forth hereinabove. Rather, this invention is within the scope of the appended claims, including the equivalents thereof available as a matter of law.

The patentee does not intend to dedicate any disclosed embodiments to the public, and to the extent any disclosed modifications or alterations may not literally fall within the scope of the claims, they are considered to be part of the invention under the doctrine of equivalents.

## Claims

1. A alkyl-substituted aryl polyalkoxylate of the formula
R-(Ar)ₙ-(O-A)ₘ-OH
where
R is a polyalkene radical derived from C₂- to C₂₀-alkenes and having a number average molecular weight of from 200 to 5,000;
Ar is a cresol;
A is an alkylene group of 2 to 8 carbon atoms;
m is a number from 12 to 32; and
n is 1.

2. An alkyl-substituted aryl polyalkoxylate as claimed in claim 1, in which R is a polybutyl or polyisobutyl radical derived from isobutene and up to 20 percent by weight of n-butene and having a number average molecular weight of from 200 to 2500.

3. An alkyl-substituted aryl polyalkoxylate as claimed in claim 1, in which R is a polybutyl or polyisobutyl radical having a number average molecular weight of from 400 to 1250.

4. An alkyl-substituted aryl polyalkoxylate as claimed in claim 1, in which R is a polybutyl or polyisobutyl radical having a number average molecular weight of from 450 to 1000.

5. An alkyl-substituted aryl polyalkoxylate as claimed in claim 1, in which m is a number from 16 to 28.

6. An alkyl-substituted aryl polyalkoxylate as claimed in claim 1, in which A is 1,2-propylene and/or 1,2-butylene.

7. A fuel additive concentrate comprising an alkyl-substituted aryl polyalkoxylate of claim 1 in an amount of from 0.1 to 80% by weight.

8. The fuel additive concentrate of claim 7 comprising the alkyl-substituted aryl polyalkoxylate of claim 1 in an amount of from 0.5 to 60% by weight.

9. A fuel composition comprising an alkyl-substituted aryl polyalkoxylate of claim 1, and a fuel.

10. The composition of claim 9, wherein the fuel is gasoline, diesel fuel, burner fuel, or jet fuel.

11. A process for reducing the formation of intake valve deposits in a. gasoline engine, comprising combusting in a gasoline engine having intake valves a fuel composition comprising a gasoline fuel and an alkyl-substituted aryl polyalkoxylate of the formula
R-(Ar)ₙ-(O-A)ₘ-OH
where
R is a polyalkene radical derived from C₂- to C₂₀-alkenes and having a number average molecular weight of from 200 to 5,000;
Ar is a cresol;
A is an alkylene group of 2 to 8 carbon atoms;
m is a number from 12 to 32; and
n is 1;
whereby the amount of deposits formed on the intake valves are reduced relative to the amount of deposits formed on the intake valves when the fuel composition combusted in the engine does not comprise the alkyl-substituted aryl polyalkoxylate.

12. A process for reducing the valve sticking in a gasoline engine, comprising combusting in a gasoline engine having intake valves a fuel composition comprising a gasoline fuel and an alkyl-substituted aryl polyalkoxylate of the formula
R-(Ar)ₙ-(O-A)ₘ-OH
where
R is a polyalkene radical derived from C₂- to C₂₀-alkenes and having a number average molecular weight of from 200 to 5,000;
Ar is a cresol;
A is an alkylene group of 2 to 8 carbon atoms;
m is a number from 12 to 32; and
n is 1;
whereby the amount of sticking of the intake valves is reduced relative to the amount of sticking of the intake valves when the fuel composition combusted in the engine does not comprise the alkyl-substituted aryl polyalkoxylate.

13. The composition of claim 9, further comprising a detergent.

14. The composition of claim 13, wherein the detergent is selected from polyisobuteneamines, hydroxyl-containing polyisobutenearnines, polyetheramines, and polyalkenyl Mannich bases.

15. The composition of claim 13, wherein the detergent is a polyalkenyl Mannich base.

16. The composition of claim 13, further comprising one or more components selected from alkali metal salts of carboxylic acids or esters, alkaline earth metal salts of carboxylic acids or esters, alkali metal salts of sulfosuccinic acids or esters, alkaline earth metal salts of sulfosuccinic acids or esters, diluents, corrosion inhibitors, film-forming ammonium salts or organic carboxylic acids or esters, heterocyclic aromatics, antioxidants, stabilizers, demulsifiers, antistatic agents, metallocenes, lubricity additives, and markers.

## Patentansprüche

1. Alkylsubstituiertes Arylpolyalkoxylat der Formel
R-(Ar)ₙ(O-A)ₘ-OH,
in der R ein von C₂-C₂₀-Alkenen abgeleiteter Polyalkylenrest mit einem zahlenmittleren Molekulargewicht von 200 bis 5.000 ist,
Ar ein Cresol ist;
A eine Alkylengruppe mit 2 bis 8 Kohlenstoffatomen ist;
m eine Zahl von 12 bis 32 ist; und
n 1 ist.

2. Alkylsubstituiertes Arylpolyalkoxylat nach Anspruch 1, in dem R ein Polybutyl- oder Polyisobutylrest, abgeleitet von Isobuten und bis zu 20 Gew.-% n-Buten, mit einem zahlenmittleren Molekulargewicht von 200 bis 2.500 ist.

3. Alkylsubstituiertes Arylpolyalkoxylat nach Anspruch 1, in dem R ein Polybutyl- oder Polyisobutylrest mit einem zahlenmittleren Molekulargewicht von 400 bis 1.250 ist.

4. Alkylsubstituiertes Arylpolyalkoxylat nach Anspruch 1, in dem R ein Polybutyl- oder Polyisobutylrest mit einem zahlenmittleren Molekulargewicht von 450 bis 1.000 ist.

5. Alkylsubstituiertes Arylpolyalkoxylat nach Anspruch 1, in dem m eine Zahl von 16 bis 28 ist.

6. Alkylsubstituiertes Arylpolyalkoxylat nach Anspruch 1, in dem A 1,2-Propylen und/oder 1,2-Butylen ist.

7. Treibstoffadditivkonzentrat, umfassend ein alkylsubstituiertes Arylpolyalkoxylat nach Anspruch 1 in einer Menge von 0,1 bis 80 Gew.-%.

8. Treibstoffadditivkonzentrat, umfassend das alkylsubstituierte Arylpolyalkoxylat nach Anspruch 1 in einer Menge von 0,5 bis 60 Gew.-%.

9. Treibstoffzusammensetzung, umfassend ein alkylsubstituiertes Arylpolyalkoxylat nach Anspruch 1 und einen Treibstoff.

10. Zusammensetzung nach Anspruch 9, in der der Treibstoff Benzin, Dieseltreibstoff, Brennstoff für einen Brenner oder Düsentreibstoff ist.

11. Verfahren zur Verringerung der Bildung von Ablagerungen am Ansaugventil in einem Benzinmotor, umfassend das Verbrennen einer Treibstoffzusammensetzung mit einem Benzintreibstoff und einem alkylsubstituierten Arylpolyalkoxylat der Formel
R-(Ar)ₙ-(O-A)ₘ-OH,
in der R ein von C₂-C₂₀-Alkenen abgeleiteter Polyalkylenrest mit einem zahlenmittleren Molekulargewicht von 200 bis 5.000 ist,
Ar ein Cresol ist;
A eine Alkylengruppe mit 2 bis 8 Kohlenstoffatomen ist;
m eine Zahl von 12 bis 32 ist; und
n 1 ist
in einem Benzinmotor mit Ansaugventilen, wobei die Menge der an den Ansaugventilen gebildeten Ablagerungen im Vergleich zur Menge der an den Ansaugventilen gebildeten Ablagerungen, wenn die im Motor verbrannte Treibstoffzusammensetzung kein alkylsubstituiertes Arylpolyalkoxylat umfasst, verringert ist.

12. Verfahren zur Verringerung des Festsetzens von Ventilen in einem Benzinmotor, umfassend das Verbrennen einer Treibstoffzusammensetzung mit einem Benzintreibstoff und einem alkylsubstituierten Arylpolyalkoxylat der Formel
R-(Ar)ₙ-(O-A)ₘ-OH,
in der R ein von C₂-C₂₀-Alkenen abgeleiteter Polyalkylenrest mit einem zahlenmittleren Molekulargewicht von 200 bis 5.000 ist,
Ar ein Cresol ist;
A eine Alkylengruppe mit 2 bis 8 Kohlenstoffatomen ist;
m eine Zahl von 12 bis 32 ist; und
n 1 ist;
in einem Benzinmotor mit Ansaugventilen, wobei das Ausmaß des Festsetzens der Ansaugventile im Vergleich zum Ausmaß des Festsetzens der Ansaugventile, wenn die im Motor verbrannte Treibstoffzusammensetzung kein alkylsubstituiertes Arylpolyalkoxylat umfasst, verringert ist.

13. Zusammensetzung nach Anspruch 9, die außerdem ein Detergenz umfasst.

14. Zusammensetzung nach Anspruch 13, in der das Detergenz aus Polyisobutenaminen, hydroxylhaltigen Polyisobutenaminen, Polyetheraminen und Polyalkenyl-Mannich-Basen ausgewählt ist.

15. Zusammensetzung nach Anspruch 13, in der das Detergenz eine Polyalkenyl-Mannich-Base ist.

16. Zusammensetzung nach Anspruch 13, umfassend außerdem eine oder mehrere Komponenten, ausgewählt aus Alkalimetallsalzen von Carbonsäuren oder -estern, Erdalkalimetallsalzen von Carbonsäuren oder -estern, Alkalimetallsalzen von Sulfobernsteinsäuren oder -estern, Erdalkalimetallsalzen von Sulfobernsteinsäuren oder -estern, Verdünnem, Korrosionsinhibitoren, filmbildenden Ammoniumsalzen oder organischen Carbonsäuren oder -estern, heterocyclischen Aromaten, Antioxidantien, Stabilisierungsmitteln, Demulgatoren, antistatischen Mitteln, Metallocenen, Schmierfähigkeitsadditiven und Markern.

## Revendications

1. Un polyalkoxylate d'aryle à substitution alkyle, de la formule
R-(Ar)ₙ-(O-A)ₘ-OH
dans laquelle
R représente un radical polyalkylène dérivé d'alcènes en C₂ à C₂₀ et présentant un poids moléculaire moyen en nombre de 200 à 5000,
Ar représente un crésol,
A représente un groupement alkylène à 2 à 8 atomes de carbone, m est un nombre de 12 à 32, et
n vaut 1

2. Un polyalkoxylate d'aryle à substitution alkyle, selon la revendication 1, dans lequel R représente un radical polybutyle ou polyisobutyle dérivé d'isobutène et comptant jusqu'à 20 % en poids de n-butène et présentant un poids moléculaire moyen en nombre de 200 à 2500.

3. Un polyalkoxylate d'aryle à substitution alkyle, selon la revendication 1, dans lequel R représente un radical polybutyle ou polyisobutyle présentant un poids moléculaire moyen en nombre de 400 à 1250.

4. Un polyalkoxylate d'aryle à substitution alkyle, selon la revendication 1, dans lequel R représente un radical polybutyle ou polyisobutyle présentant un poids moléculaire moyen en nombre de 450 à 1000.

5. Un polyalkoxylate d'aryle à substitution alkyle, selon la revendication 1, dans lequel m est un nombre de 16 à 28.

6. Un polyalkoxylate d'aryle à substitution alkyle, selon la revendication 1, dans lequel A représente le 1,2-propylène et/ou le 1,2-butylène.

7. Additif concentré pour carburant comprenant un polyalkoxylate d'aryle à substitution alkyle, selon la revendication 1, en quantité de 0,1 à 80% en poids.

8. Additif concentré pour carburant selon la revendication 7, comprenant le polyalkoxylate d'aryle à substitution alkyle selon la revendication 1, en quantité de 0,5 à 60% en poids.

9. Composition de carburant comprenant un polyalkoxylate d'aryle à substitution alkyle selon la revendication 1, et un carburant.

10. Composition selon la revendication 9, dans laquelle le carburant est de l'essence, du carburant diesel, du carburant pour brûleur ou du carburant pour réacteur.

11. Procédé pour réduire la formation de dépôts à la soupape d'admission dans un moteur à essence, comprenant la combustion, dans un moteur à essence présentant des soupapes d'admission, d'une composition de carburant comprenant un carburant de type essence et un polyalkoxylate d'aryle à substitution alkyle de la formule
R-(Ar)ₙ-(O-A)ₘ-OH
dans laquelle
R représente un radical polyalkylène dérivé d'alcènes en C₂ à C₂₀ et présentant un poids moléculaire moyen en nombre de 200 à 5000,
Ar représente un crésol,
A représente un groupement alkylène à 2 à 8 atomes de carbone, m est un nombre de 12 à 32, et
n vaut 1
ce par quoi la quantité de dépôts formés sur les soupapes d'admission est réduite par rapport à la quantité de dépôts formés sur les soupapes d'admission lorsque la composition de carburant brûlée dans le moteur ne comprend pas le polyalkoxylate d'aryle à substitution alkyle.

12. Procédé pour réduire le collage des soupapes dans un moteur à essence, comprenant la combustion, dans un moteur à essence présentant des soupapes d'admission, d'une composition de carburant comprenant un carburant de type essence et un polyalkoxylate d'aryle à substitution alkyle de la formule
R-(Ar)ₙ-(O-A)ₘ-OH
dans laquelle
R représente un radical polyalkylène dérivé d'alcènes en C₂ à C₂₀ et présentant un poids moléculaire moyen en nombre de 200 à 5000,
Ar représente un crésol,
A représente un groupement alkylène à 2 à 8 atomes de carbone, m est un nombre de 12 à 32, et
n vaut 1
ce par quoi le collage des soupapes d'admission est réduit par rapport au collage des soupapes d'admission lorsque la composition de carburant brûlée dans le moteur ne comprend pas le polyalkoxylate d'aryle à substitution alkyle.

13. Composition selon la revendication 9, comprenant en outre un détergent.

14. Composition selon la revendication 13, dans laquelle le détergent est choisi parmi des polyisobutène amines, des polyisobutène amines contenant des hydroxyles, des polyéther amines et des bases de Mannich de polyalcényles.

15. Composition selon la revendication 13, dans laquelle le détergent est une base de Mannich de polyalcényle.

16. Composition selon la revendication 13, comprenant de plus un ou plusieurs composants choisis parmi des sels de métaux alcalins d'acides ou d'esters carboxyliques, des sels de métaux alcalino-terreux d'acides ou d'esters carboxyliques, des sels de métaux alcalins d'acides ou d'esters sulfosucciniques, des sels de métaux alcalino-terreux d'acides ou d'esters sulfosucciniques, des diluants, des inhibiteurs de corrosion, des acides ou esters d'acides carboxyliques ou des sels d'ammonium filmogènes, des aromatiques hétérocycliques, des antioxydants, des désémulsionnants, des agents antistatiques, des métallocènes, des additifs de lubrification et des marqueurs.
